# EUROPÄISCHE PATENTANMELDUNG

(11) **EP 2 977 788 A1**
(43) Veröffentlichungstag der Anmeldung: **27.01.2016**
(21) Anmeldenummer: 15173163.5
(22) Anmeldetag: 22.06.2015
(51) Int. Cl.: G01S 13/87, G01S 13/34, G01S 13/93, G01C 21/34

(54) **VERFAHREN ZUR RADARGESTÜTZTEN NAVIGATION**

(30) Priorität: 23.07.2014 DE 102014214391
(71) Anmelder: ROBERT BOSCH GMBH, 70442 Stuttgart (DE)
(72) Erfinder: Lehnertz, Benedikt, 71634 Ludwigsburg (DE)

(57) **Zusammenfassung**

Die vorliegende Erfindung betrifft ein Verfahren zur Orientierung in einer jeweiligen Umgebung eines Fahrzeugs, bei dem von einem von dem Fahrzeug umfassten Radarsensor abgestrahlte und von mindestens einem Sensorobjekt (21, 23, 25, 27, 29, 31, 33) in der Umgebung reflektierte Radarstrahlen von dem Radarsensor erfasst werden und wobei mittels eines Steuergeräts berechnet wird, ob das mindestens eine Sensorobjekt (21, 23, 25, 27, 29, 31, 33) mindestens einem im Voraus bereitzustellendem Referenzobjekt (2, 4, 6, 8, 10, 12, 14, 16) entspricht und über eine Abstandsmessung zu dem mindestens einen Sensorobjekt (21, 23, 25, 27, 29, 31, 33) eine aktuelle Position (404) des Radarsensors auf einer Karte (101) der Umgebung berechnet wird.

## Beschreibung

### Stand der Technik

Die vorliegende Erfindung betrifft ein Verfahren zur Navigation mittels eines Radarsensors sowie ein mit einem Radarsensor ausgerüstetes Fahrzeug.

Zur Orientierung bzw. Navigation von Fahrzeugen in einer jeweiligen Umgebung werden derzeit sowohl kamerabasierte Systeme eingesetzt, die auch innerhalb geschlossener Räume funktionieren, als auch Systeme basierend auf einem sogenannten global positioning system (GPS), bei dem aktuelle Positionen verschiedener Satelliten verwendet werden, um eine Positionsbestimmung für ein jeweiliges Fahrzeug durchzuführen.

Nachteilig an den bekannten Verfahren ist, dass diese zum einen relativ ungenau sind und zum anderen einen eingeschränkten Einsatzbereich haben. So kann ein Kamerasensor in der Regel nur bei ausreichender Beleuchtung und ein GPS-System nur im Außenbereich eingesetzt werden.

### Offenbarung der Erfindung

Vor diesem Hintergrund wird ein Verfahren mit den Merkmalen des unabhängigen Patentanspruchs 1 sowie ein Fahrzeug mit einem Radarsensor mit den Merkmalen des unabhängigen Patentanspruchs 12 vorgestellt. Ausführungsformen ergeben sich aus den abhängigen Ansprüchen.

Um die Nachteile des Standes der Technik zu überwinden, sieht das Verfahren eine Verwendung eines Radarsensors vor. Der Radarsensor ist auf einem Fahrzeug angeordnet, um eine aktuelle Position des Fahrzeugs in Relation zu jeweiligen Objekten in einer jeweiligen Umgebung zu ermitteln. Durch ein Übertragen der von dem Sensor ermittelten Position des Fahrzeugs, bzw. jeweiliger von dem Radarsensor ermittelter Sensorobjekte in der jeweiligen Umgebung in eine Karte, kann das Fahrzeug sehr genau und unabhängig von jeweiligen Umgebungsbedingungen durch die jeweilige Umgebung navigiert bzw. geleitet werden.

Unter einem Radarsensor ist im Kontext der vorliegenden Erfindung eine Vorrichtung zu verstehen, die elektromagnetische Wellen im Radiofrequenzbereich (Funkwellen) gebündelt als sogenanntes Primärsignal aussendet und ein von jeweiligen Objekten in der Umgebung, d. h. Sensorobjekten reflektiertes "Echo" als Sekundärsignal empfängt und nach verschiedenen Kriterien bspw. mittels eines Steuergeräts auswertet, d. h. zur Ortung der jeweiligen Sensorobjekte verwendet.

Um ein Fahrzeug möglichst genau durch eine jeweilige Umgebung zu navigieren bzw. zu leiten, ist vorgesehen, dass in der jeweiligen Umgebung Referenzobjekte positioniert werden, die mittels des Radarsensors identifiziert werden können und deren exakte Position in der jeweiligen Umgebung bekannt bzw. in einer Datei hinterlegt ist, die mit dem Radarsensor in Verbindung steht.

Unter einem Referenzobjekt ist im Kontext der vorgestellten Erfindung ein Objekt zu verstehen, das von einem Radarsensor angestrahlt werden kann und ein charakteristisches Signal, d. h. Sekundärsignal, mit einer eindeutigen Rückstreuleistung an den Radarsensor reflektiert, d. h. zurückstrahlt. Mögliche Ausgestaltungen von Referenzobjekten sind bspw. Tripelspiegel oder andere Retroreflektoren, wobei auch jedes weitere technisch geeignete Objekt mit einer eindeutigen Rückstreuleistung denkbar ist.

Unter einer eindeutigen Rückstreuleistung, d. h. Rückstrahlcharakterisitk, ist im Kontext des vorgestellten Verfahrens ein von einem Referenzobjekt reflektiertes Radarsignal mit definierten, d. h. eindeutig spezifizierten Eigenschaften zu verstehen, wobei unter Eigenschaften des Radarsignals Werte von Merkmalen oder Varianzen von Werten von Merkmalen, wie bspw. Relativabstand, Relativgeschwindigkeit, gemessene Höhe, Winkelgüte, Ausdehnung oder gemessener Radarquerschnitt zu verstehen sind, wobei sich zur Identifikation eines Objekts auch jede weitere über Radarstrahlen zu erfassende Eigenschaft bzw. jedes zu erfassende Merkmal eignet.

Um ein Sensorobjekt, d. h. ein von einem Radarsensor erfasstes Objekt, zu identifizieren bzw. von weiteren Senorobjekten zu unterscheiden, können verschiedene Eigenschaften des Sensorobjekts, wie bspw. Relativabstand, Relativgeschwindigkeit, gemessene Höhe, Winkelgüte, Ausdehnung oder gemessener Radarquerschnitt sowie jede weitere über Radarstrahlen zu erfassende Eigenschaft bzw. jedes zu erfassende Merkmal durch bspw. ein Steuergerät in einem Merkmalsvektor zusammengefasst und mit weiteren Merkmalsvektoren, die bspw. in dem Steuergerät hinterlegt sind, abgeglichen werden.

Weiterhin ist denkbar, dass ein Merkmalsvektor eines jeweiligen Sensorobjekts aktiv durch das jeweilige Sensorobjekt zur Verfügung gestellt, d. h. bspw. per drahtloser Kommunikation übertragen wird.

Bei Radarreflektoren, wie bspw. Referenzobjekten, sind Varianzen jeweiliger Eigenschaften eines reflektierten Radarsignals sehr gering, da es sich bei einem Radarreflektor um ein Punktziel handelt, so dass, im Gegensatz zu gewöhnlichen Objekten, bei Radarreflektoren keine bzw. nur reduzierte Reflexwanderungen zu erkennen sind. Da sich jeweilige Merkmale eines Redarreflektros, wie bspw. eines Referenzobjekts, bei einer Annäherung eines jeweiligen Radarsensors ändern, werden die jeweiligen Merkmale über die Zeit hinweg berechnet und zur Identifikation jeweiliger Referenzobjekte über einen Merkmalsvektor verwendet. Dies bedeutet, dass jeweilige durch einen Radarsensor empfangen Signale mit bekannten, d. h. bspw. durch einen Klassifikator angelernten Signalen, bspw. mittels verschiedener Merkmalsvektoren abgeglichen und so identifiziert werden können.

Tripelspiegel bzw. Retro- , d. h. Radarreflektoren, bieten den Vorteil, dass diese unabhängig von einer jeweiligen Ausrichtung eines jeweiligen Radarreflektors einen Großteil einer einfallenden Strahlung zur Quelle der Strahlung hin reflektieren. Entsprechend bedingen von Retroreflektoren reflektierte Strahlen im Vergleich zu anderen Objekten sehr starke und gut zu erfassende Radarechos.

Durch eine eindeutige Rückstreuleistung, bspw. in einer bestimmten Wellenlänge und/oder Amplitude, kann ein jeweiliges Referenzobjekt identifiziert und von beliebigen anderen Sensorobjekten in einer jeweiligen Umgebung des Radarsensors bzw. Fahrzeugs unterschieden werden. Da ferner die Positionen der Referenzobjekte bekannt sind, kann eine aktuelle Position des Radarsensors relativ zu jeweiligen detektierten Referenzobjekten berechnet werden.

In Ausgestaltung können auch aktive Referenzobjekte bzw. Transponder vorgesehen sein, die mit einer Sendeeinheit ausgestattet sind, um einen jeweiligen Radarsensor aktiv anzustrahlen bzw. ein empfangenes Radarsignal zu verstärken und dem Radarsensor dadurch eine Identifikation des jeweiligen Referenzobjekts einfacher zu ermöglichen als dies bei passiven Referenzobjekten der Fall ist, wobei ein jeweiliger Transponder bspw. mittels einer Radar-, Bluetooth-, WLAN- oder 3G-Sendeeinheit ausgestattet sein kann, um einem jeweiligen Radarsensor, der ggf. mit einer entsprechenden Empfangseinheit ausgestattet sein kann, zusätzliche Informationen, wie bspw. einen jeweiligen Merkmalsvektor in Reaktion auf ein Anstrahlen durch den Radarsensor zu übermitteln.

Falls zu den jeweiligen Referenzobjekten Merkmale, wie bspw. entsprechende Koordinaten auf einer Karte bekannt, d. h. in dem Steuergerät zur Berechnung der aktuellen Position des Radarsensors hinterlegt sind, kann die aktuelle Position auf einer entsprechenden Karte eingezeichnet und zur Navigation bzw. Routenführung verwendet werden. Eine derartige Routenführung kann bspw. in einem Parkhaus, Parkplatz oder auf einem landwirtschaftlich bewirtschafteten Grund sowohl innen als auch außen bereitgestellt werden. Dabei kann ein jeweiliges Fahrzeug anhand von im Voraus platzierten Referenzobjekten entlang einer jeweiligen Route ggf. automatisch zu einem jeweiligen Punkt, wie bspw. einem Parkplatz, relativ zu mindestens einem Referenzobjekt geleitet werden. Ferner ist auch eine Routenführung innerhalb eines Lagers, bspw. für Flurförderzeuge denkbar, bei der jeweilige Waren automatisch identifiziert und durch ein jeweiliges Flurförderfahrzeug angesteuert und im Anschluss durch eine Versandstation versendet werden. Dabei kann durch den Radarsensor als zusätzliche Funktion eine automatische Hinderniserkennung erfolgen, so dass eine Kollision eines Hindernisses mit bspw. einem Flurförderfahrzeug automatisch vermieden wird.

Weiterhin ist es unter Verwendung des vorgestellten Verfahrens möglich, Leitsysteme bspw. zu einem nächstmöglichen freien Parkplatz in einem Parkhaus bereitzustellen. Dazu kann vorgesehen sein, dass jeweilige Referenzobjekte in einem Parkplatz je nach Belegung erkennbar oder verdeckt sind, so dass das Leitsystem entsprechende Routen berechnen und an ein Fahrzeug übertragen kann.

Es ist möglich, dass jeweilige Referenzobjekte nicht nur mit Koordinaten verbunden sind, sondern auch mit zusätzlichen Informationen, wie bspw. einem Streckenverlauf oder Attributen einer jeweiligen Umgebung, wie bspw. Bodengüte oder Verfügbarkeit von Ressourcen, wie bspw. Parkraum. Entsprechend kann eine jeweilige Route ggf. an diese zusätzlichen Informationen angepasst werden. Dabei kann die Route sowohl von einem von dem jeweiligen Fahrzeug umfassten Steuergerät als auch von einem Leitsystem berechnet werden, dass die entsprechende Route nach Abschluss der Berechnungen an das jeweilige Fahrzeug überträgt.

In Ausgestaltung kann der Radarsensor zusätzlich zur Erkennung bzw. Detektion jeweiliger Referenzobjekte auch zur Detektion weiterer Sensorobjekte, wie bspw. Gefahrenstellen oder Hindernissen verwendet werden. Insbesondere bei eingeschränkter Sicht kann mittels Radartechnologie eine verlässliche Abtastung einer jeweiligen Umgebung gewährleistet und dadurch eine verbesserte Übersicht ermöglicht werden.

Ein mögliches Schema zur Ausführung einer Navigation mittels Radarsensor und Referenzobjekten könnte bspw. wie folgt ausgestaltet sein:
a) Bestimme zum Zeitpunkt tₙ auf einer Menge von Sensorobjekten S, bei welchen Sensorobjekten S es sich um Referenzobjekte R handelt, wobei zur Unterscheidung zwischen nicht Referenzobjekten und Referenzobjekten bspw. eine charakteristische Eigenschaft, wie Höhe und/oder Rückstreuleistung zu verwenden ist.
b) Vergleiche jeweilige Merkmale von detektierten Referenzobjekten mit im Voraus auf einer Karte bereitgestellten Merkmalen.
c) Suche für alle detektierten Referenzobjekte entsprechende Referenzobjekte in der Karte. Dazu gehe wie folgt vor:
   Bilde ein Suchfenster, ausgehend von einer aktuellen Position des Radarsensors zu einem Startzeitpunkt tₙ₋₁, wobei das Suchfenster in seinen Ausmaßen von einem gemessenen Abstand zwischen mindestens einem jeweiligen Referenzobjekt und dem Radarsensor sowie einer maximal möglichen Bewegung des Radarsensors bzw. Fahrzeugs innerhalb eines Messzyklus abhängt.
   Suche weiterhin Referenzobjekte innerhalb des Suchfensters in der Karte, ggf. durch einen Abgleich mit jeweiligen Merkmalsvektoren der jeweiligen Sensorobjekte. Plausibilisiere jeweilige Referenzobjekte durch einen Abgleich jeweiliger Eigenschaften der jeweiligen Referenzobjekte zueinander, bspw. durch Vergleich von Abstand und/oder Merkmalsvektoren und/oder einer Anordnung im Uhrzeigersinn. Ordne jeweilige detektierte Referenzobjekte Rᵢ jeweiligen auf der Karte hinterlegten Referenzobjekten Rⱼ zu.
d) Bilde für jede Zuordnung Rᵢ → Rⱼ einen Kreis, wobei der Kreisumfang der Entfernung des jeweiligen detektierten Referenzobjekts zu dem Radarsensor entspricht.
e) Berechne mittels Trilateration aus den jeweiligen Kreisen eine aktuelle Position des Radarsensors auf der Karte. Für den Fall, dass lediglich zwei Zuordnungen vorhanden sind, existieren zwei Lösungen. Entsprechend muss plausibilisiert werden, welche Position korrekt ist, bspw. über eine maximale Distanz, die der Radarsensor bzw. das entsprechende Fahrzeug in einem Messzyklus zurücklegen kann. Für den Fall, dass lediglich eine Zuordnung existiert, kann die relative Position bzw. die Sensorbewegung aus weiteren detektierten Sensorobjekten geschätzt werden, wobei auch eine Kalman-Filterung mit oder ohne Odometrie denkbar ist.

Ferner betrifft die vorliegende Erfindung ein Fahrzeug mit einem Radarsensor zur Ausführung des erfindungsgemäßen Verfahrens.

Das erfindungsgemäße Fahrzeug ist insbesondere geeignet für ein vollautomatisches Befahren von vordefinierten Strecken bzw. Routen.

Weiterhin ist es möglich ein Fahrzeug mit einem Radarsensor und/oder einem entsprechenden Steuergerät aufzurüsten bzw. nachzurüsten, so dass ein beliebiges Fahrzeug für eine Ausführung des erfindungsgemäßen Verfahrens verwendet werden kann.

Weitere Vorteile und Ausgestaltungen ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen.
Figur 1 zeigt eine mögliche Ausführungsform einer Karte mit Referenzobjekten und entsprechenden Merkmalsvektoren.
Figur 2 zeigt eine mögliche Ausführungsform eines Resultats einer Radarmessung mittels eines Radarsensors.
Figur 3 zeigt eine mögliche Ausführungsform eines Suchfensters auf der Karte.
Figur 4 zeigt eine mögliche Ausführungsform einer Trilateration zum Ermitteln einer aktuellen Position des Radarsensors.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

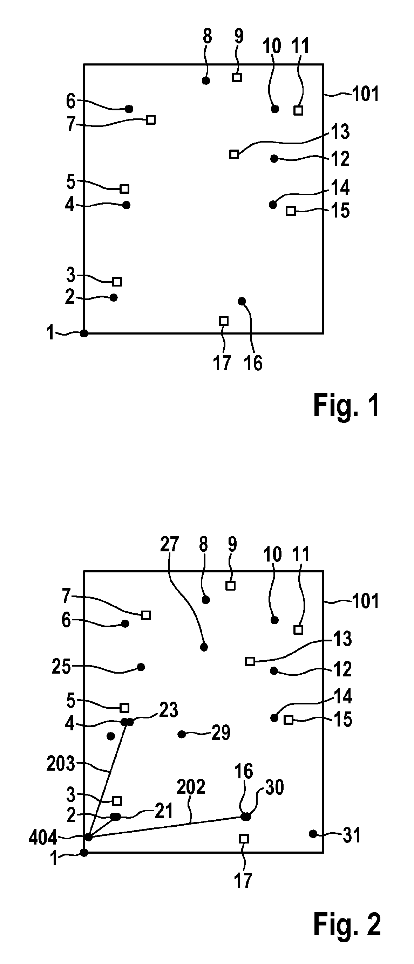

Die in Figur 1 dargestellte Karte 101 zeigt eine Anordnung von Referenzobjekten 2, 4, 6, 8, 10, 12, 14, 16, die in Abhängigkeit einer Position 1 eines Radarsensors in der Karte abgebildet sind. Jedem der Referenzobjekte 2, 4, 6, 8, 10, 12, 14, 16 ist ferner ein Merkmalsvektor 3, 5, 7, 9, 11, 13, 15, 17 zugeordnet, der Informationen über eine jeweilige Position und/oder Merkmale des entsprechenden Referenzobjekts 2, 4, 6, 8, 10, 12, 14, 16 enthält.

In Figur 2 wurde mittels des Radarsensors eine jeweilige Umgebung vermessen und jeweilige Abstände zu jeweiligen Sensorobjekten als Messpunkte 21, 23, 25, 27, 29, 31 und 33 in die in Figur 1 dargestellte Karte 101 eingetragen. Entsprechend sind von den Sensorobjekten 21, 23, 25, 27, 29, 31 und 33 lediglich Abstände 202, 203 zu einer aktuellen Position 404 des Radarsensors bekannt, wohingegen zu jeweiligen Referenzobjekten 2, 4, 6, 8, 10, 12, 14, 16 im Voraus bereits Koordinaten hinterlegt wurden, so dass diese für eine Orientierung im Raum bzw. für eine Routenführung auf der Karte 101 oder einer beliebigen anderen Karte verwendet werden können.

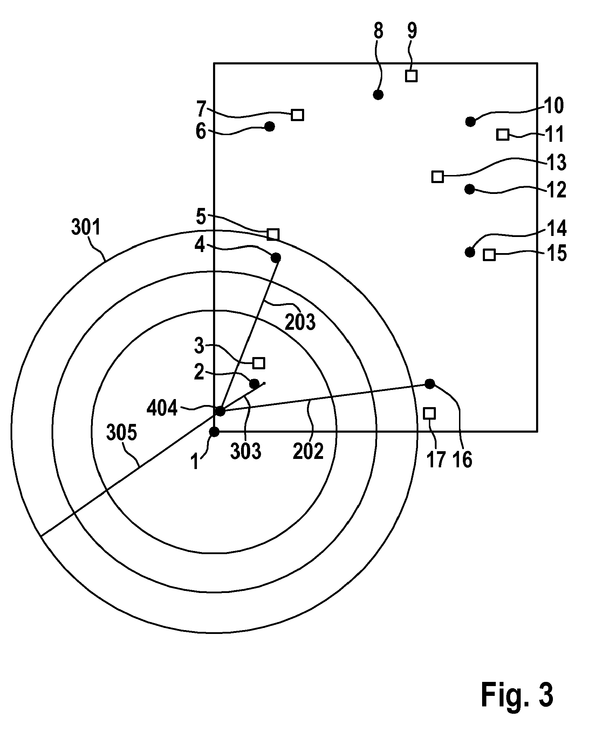

Eine Zuordnung von im Voraus bereitgestellten Koordinaten bzw. Informationen zu jeweiligen Referenzobjekten 2, 4, 6, 8, 10, 12, 14, 16 ist in Figur 3 dargestellt. Dabei wird, ausgehend von einer aktuellen Position 1 des Radarsensors in der Karte, ein Suchfenster 301 erstellt, das auf einem jeweiligen gemessenen Abstand 202, 203, 303 zwischen einem über den Radarsensor detektierten Referenzobjekt 2, 4, 6, 8, 10, 12, 14, 16 und einem maximalen möglichen Bewegungsradius 305 des Radarsensors bzw. eines mit dem Radarsensor verbundenen Fahrzeugs beruht.

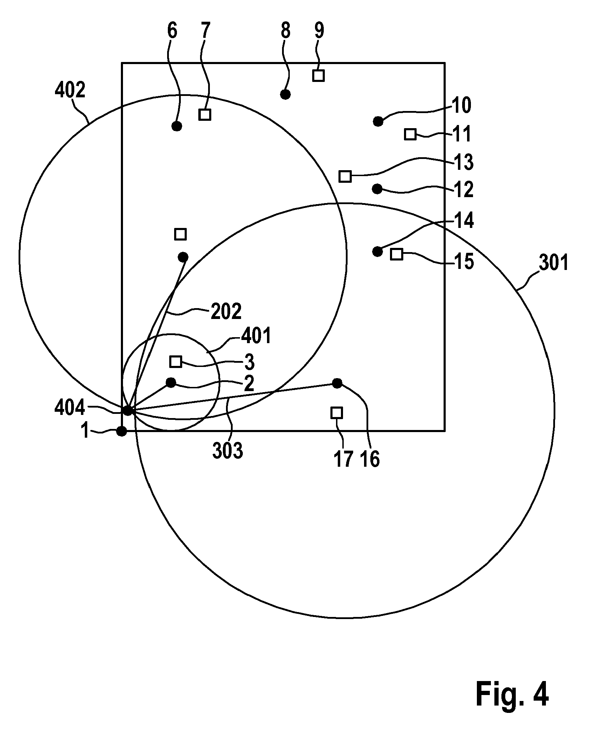

Mittels Trilateration kann, wie in Figur 4 dargestellt, basierend auf jeweiligen Suchfenstern 301, 401, 402 eine Position 404 des Radarsensors zu einem aktuellen Zeitpunkt, in Abhängigkeit jeweiliger Referenzobjekte 2, 4, 6, 8, 10, 12, 14, 16 berechnet werden. Die aktuelle Position 404 des Radarsensors ergibt sich demnach aus einem Schnittpunkt der jeweiligen Suchfenster 301, 401 und 402.

## Patentansprüche

1. Verfahren zur Orientierung in einer jeweiligen Umgebung eines Fahrzeugs, bei dem von einem von dem Fahrzeug umfassten Radarsensor abgestrahlte und von mindestens einem Sensorobjekt (21, 23, 25, 27, 29, 31, 33) in der Umgebung reflektierte Radarstrahlen von dem Radarsensor erfasst werden und wobei mittels eines Steuergeräts berechnet wird, ob das mindestens eine Sensorobjekt (21, 23, 25, 27, 29, 31, 33) mindestens einem im Voraus bereitzustellenden Referenzobjekt (2, 4, 6, 8, 10, 12, 14, 16) entspricht und über eine Abstandsmessung zu dem mindestens einen Sensorobjekt (21, 23, 25, 27, 29, 31, 33) eine aktuelle Position (404) des Radarsensors auf einer Karte (101) der Umgebung berechnet wird.

2. Verfahren nach Anspruch 1, bei dem das Fahrzeug ein Landfahrzeug ist.

3. Verfahren nach einem der Ansprüche 1 oder 2, bei dem jedem Referenzobjekt (2, 4, 6, 8, 10, 12, 14, 16) in der Karte ein eindeutiger Merkmalsvektor (3, 5, 7, 9, 11, 13, 15, 17) zugeordnet ist.

4. Verfahren nach einem der voranstehenden Ansprüche, bei dem als Referenzobjekt (2, 4, 6, 8, 10, 12, 14, 16) ein Tripelspiegel mit einer eindeutigen Rückstreuleistung gewählt wird.

5. Verfahren nach einem der voranstehenden Ansprüche, bei dem die Orientierung zur Navigation auf der Karte (101) in Abhängigkeit jeweiliger Referenzobjekte (2, 4, 6, 8, 10, 12, 14, 16) genutzt wird.

6. Verfahren nach Anspruch 5, bei dem die Navigation in einem Gebäude erfolgt.

7. Verfahren nach einem der voranstehenden Ansprüche, bei dem ausgehend von einer Startposition (1) zu einem bestimmten Zeitpunkt jeweilige Referenzobjekte (2, 4, 6, 8, 10, 12, 14, 16) aus einer Menge an von dem Radarsensor erfassten Sensorobjekten (21, 23, 25, 27, 29, 31, 33) anhand vorbekannter Eigenschaften identifiziert werden und aus einer Datenbank jeweilige Merkmale der jeweiligen Referenzobjekte (2, 4, 6, 8, 10, 12, 14, 16) geladen und in die Karte (101) eingebunden werden.

8. Verfahren nach Anspruch 7, bei dem ein Suchfenster (301) ausgehend von einer aktuellen Position (404) des Radarsensors gebildet wird, wobei das Suchfenster (301) auf einem gemessenen Abstand (303) zwischen Radarsensor und mindestens einem Referenzobjekt (2, 4, 6, 8, 10, 12, 14, 16) sowie einer maximal möglichen Bewegung des Radarsensors innerhalb eines Messzyklus basiert und wobei für ein jeweiliges Referenzobjekt (2, 4, 6, 8, 10, 12, 14, 16) innerhalb des Suchfensters (301) eine Plausibilitätsprüfung erfolgt und bei bestätigter Plausibilität eines jeweiligen Referenzobjekts (2, 4, 6, 8, 10, 12, 14, 16) ein Kreis um das jeweilige Referenzobjekt gezogen wird, der einem Abstand (303) des jeweiligen Referenzobjekts (2, 4, 6, 8, 10, 12, 14, 16) zum Radarsensor entspricht und wobei eine aktuelle Position (404) des Radarsensors mittels Trilateration auf Basis jeweiliger Entfernungen jeweiliger Referenzobjekte (2, 4, 6, 8, 10, 12, 14, 16) vom Radarsensor bestimmt wird.

9. Verfahren nach Anspruch 8, bei dem für den Fall, dass nur zwei Abstände (303) zu jeweiligen Referenzobjekten (2, 4, 6, 8, 10, 12, 14, 16) verfügbar sind und entsprechend zwei mögliche Lösungen existieren, über eine maximale Distanz, die der Radarsensor zwischen einem Messzyklus zurücklegen kann, die aktuelle Position (404) des Radarsensors plausibilisiert wird.

10. Verfahren nach Anspruch 8, bei dem für den Fall dass nur ein Abstand (303) zu einem Referenzobjekt (2, 4, 6, 8, 10, 12, 14, 16) verfügbar ist, eine relative Position mittels der jeweiligen Sensorobjekte (21, 23, 25, 27, 29, 31, 33) geschätzt wird.

11. Verfahren nach Anspruch 8, bei dem für den Fall, dass nur ein Abstand (303) zu einem Referenzobjekt verfügbar ist, eine relative Positionsbestimmung über eine Kaiman-Filterung mit Odometrie durchgeführt wird.

12. Fahrzeug mit einem Radarsensor und einem Steuergerät, wobei das Steuergerät derart konfiguriert ist, dass von dem Radarsensor abgestrahlte und von mindestens einem Sensorobjekt (21, 23, 25, 27, 29, 31, 33) in einer jeweiligen Umgebung reflektierte und von dem Radarsensor erfasste Radarstrahlen verwendet werden, um zu berechnen, ob das mindestens eine Sensorobjekt (21, 23, 25, 27, 29, 31, 33) mindestens einem im Voraus bereitzustellenden Referenzobjekt entspricht und über eine Abstandsmessung zu dem mindestens einen Sensorobjekt (2, 4, 6, 8, 10, 12, 14, 16) eine aktuelle Position des Radarsensors auf einer Karte (101) der jeweiligen Umgebung zu bestimmen.
